# EUROPEAN PATENT APPLICATION

(11) **EP 1 762 765 A2**
(43) Date of publication of application: **14.03.2007**
(21) Application number: 06018959.4
(22) Date of filing: 11.09.2006
(51) Int. Cl.: F16K 31/06, F16K 11/07

(54) **Damper spool**

(30) Priority: 13.09.2005 US 225330
(71) Applicant: Eaton Corporation, Cleveland, Ohio 44114-2584 (US)
(72) Inventor: Boddy, Douglas E., Orion, Michigan 48359 (US)
(74) Representative: Rüger, Barthelt & Abel Patentanwälte

(57) **Abstract**

A spool (36) for a valve assembly (10) is disclosed. The spool (36) comprises an intermediate portion (51) adapted to form a control chamber (53) with a valve body (30), and a first end portion (48) adapted to form a first damper chamber (52) with the valve body (30), wherein the control chamber (53) is in hydraulic communication with the first damper chamber (52) such that the hydraulic communication dampens movement of the spool (36) within the valve body (30).

## Description

### BACKGROUND

### Technical Field

The present invention relates to a damper spool, including a damper spool for a valve.

### Description of the Related Art

Spool valves are known and used in a variety of applications. Among other examples, a spool valve may statically or dynamically control pressure in an environment such as, for example, in connection with a hydraulic pump. Certain known spool valves control pressure by employing a magnetic element that, upon excitation, activates a rod and a spool connected thereto to controllably change pressure of a fluid or the like residing in a valve portion of a spool valve. Generally, the spool is slidably disposed in a longitudinal bore defined in a valve body. The movement of the rod and spool provide a mechanism to generally control pressure related to a medium passing through portions of a valve body.

### SUMMARY

A spool for a valve assembly is disclosed. The spool comprises an intermediate portion adapted to form a control chamber with a valve body, and a first end portion adapted to form a first damper chamber with the valve body, wherein the control chamber is in hydraulic communication with the first damper chamber such that said hydraulic communication dampens movement of the spool within the valve body.

### BRIEF DESCRIPTION OF THE DRAWINGS

Referring now to the drawings, embodiments of the present invention are shown. The drawings are not necessarily to scale and certain features may be simplified or exaggerated to better illustrate and explain the invention. Further, the embodiments set forth herein are not intended to be exhaustive or otherwise limit or restrict the invention to the precise configurations shown in the drawings and disclosed in the following detailed description.

FIG. 1 is a cross-section view of a valve according to an embodiment of the invention;

FIG. 2 is a cross-section view of a valve according to an embodiment of the invention; and

FIG. 3 is a cross-section view of a valve according to an embodiment of the invention.

### DETAILED DESCRIPTION

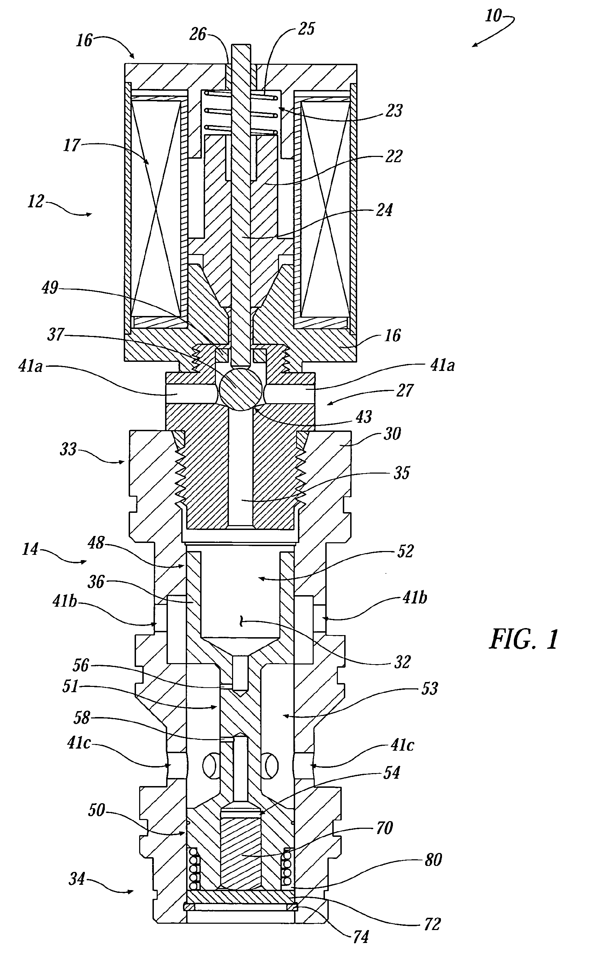

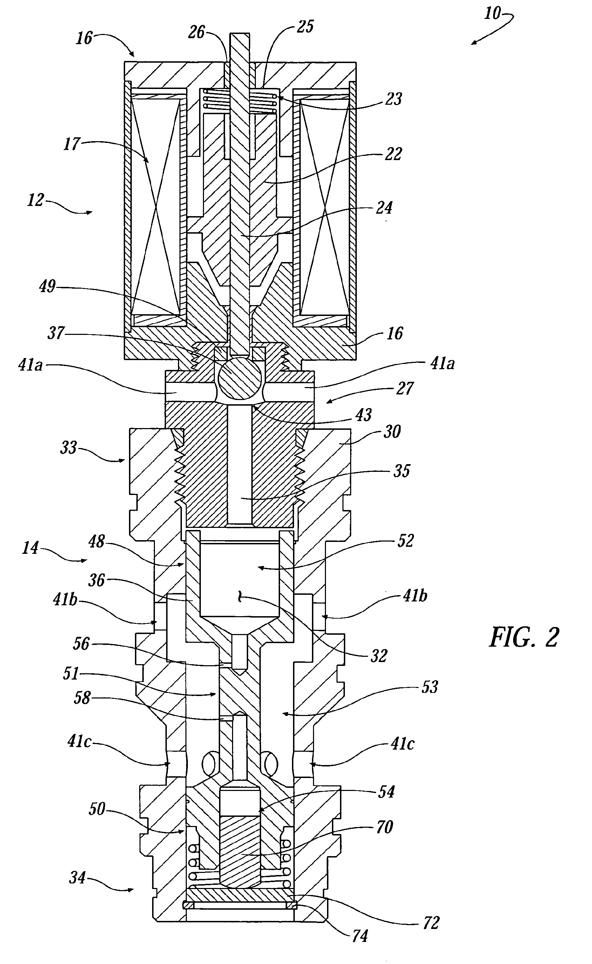

Figure 1 and Figure 2 illustrate an exemplary valve assembly (or "valve") 10 in accordance with an embodiment of the invention. Referring to Figure 1, valve 10 is illustrated in an energized, closed valve configuration and valve 10 includes a first portion and a second portion. For convenience, first portion is also referred to as an actuation portion 12, and second portion is also referred to as a valve portion 14. However, it will be readily apparent to one skilled in the art that other descriptive terms may also be used to define such portions.

Actuation portion 12 includes a case 16 and an actuator 17. In an embodiment, at least a portion of case 16 includes a flux collector. Case 16 generally surrounds actuator 17. It will be appreciated that actuation portion 12, actuator 17, and case 16 may be designed and configured in accordance with various known arrangements and, as such, actuation portion 12, actuator 17, and case 16 are only generally described herein. Various alternatives to the illustrated arrangement will be recognized by one of ordinary skill in the art, and the present invention should not be limited to the actuation portion illustrated and described.

In an embodiment, actuator 17 may include a bobbin having an electromagnetic coil operatively wrapped therearound to generally provide a magnetic coil arrangement. Magnetic coil arrangements to operate solenoid valves are understood by those skilled in the art. A terminal (not shown) may also be connected to the electromagnetic coil and to a ground to generate an electromagnetic force. In an embodiment, a terminal may be adapted to receive a signal provided from a control device (not shown). The control device may be internal to the solenoid or may be part of an external system.

Actuator 17 includes a longitudinal channel 23 that may be generally positioned at a central portion of a bobbin. An armature 22 and a rod 24 may be slidably disposed in channel 23, for example, as shown in the Figures. Armature 22 and rod 24 may be operatively connected to one another such that movement of armature 22 can also provide movement to rod 24 and vice-versa. In an embodiment, a biasing device 25 may also be included between armature 22 and a portion of case 16. Biasing device 25 generally urges or biases rod 24 and armature 22 toward valve portion 14. In an embodiment, an adjusting means 26, such as a screw or the like, may be connected to biasing device 25 to adjustably produce or impart a desired amount of force. For example, a force (such as a compression force) asserted by biasing device 25 between a portion of case 16 and armature 22 may be produced and/or adjusted. The benefits and uses of a biasing device are known in the art. Among other examples, biasing device 25 may include a coil spring or other types of spring members. However, persons of skill in the art will recognize that other biasing devices may also be employed, whether alone or in various combinations. Moreover, if desired, a bearing or the like may be attached to a portion of case 16 to facilitate rotatable movement of rod 24 about case 16.

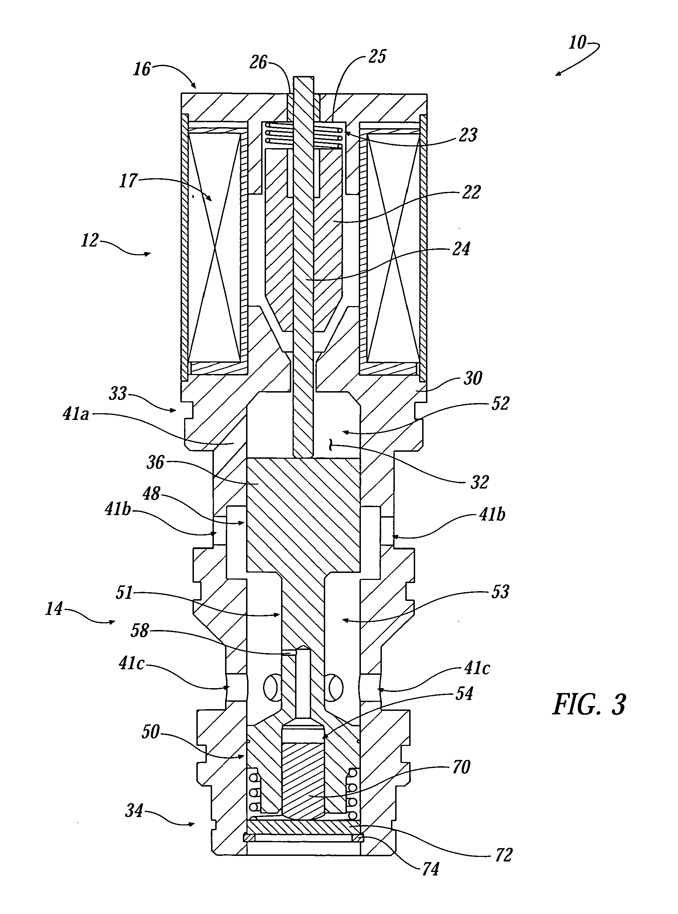

Referring now to Figure 1 and Figure 2, an intermediate seating portion 27 can, if desired, be disposed between actuation portion 12 and valve portion 14. It will be appreciated that intermediate seating portion 27 may be omitted and the actuation portion 12 may instead be in direct communication with valve portion 14 (see e.g., Figure 3). These and other features will be readily recognized by one of ordinary skill in the art.

In an embodiment, case 16 and the actuator 17 may be operatively connected to intermediate seating portion 27 and valve portion 14. Case 16, intermediate seating portion 27, and valve portion 14 can be attached using an attachment means. For example, without limitation, case 16, intermediate seating portion 27 and valve portion 14 may be threadably attached or, if desired, they may be crimped, soldered, brazed, mechanically staked, or otherwise mechanically connected. In an embodiment, a sealing means or the like may be disposed between actuation portion 12 and intermediate portion 25; between valve portion 14 and intermediate portion 25; and /or between actuation portion 12 and valve portion 14, such that fluid resident in valve portion 14 may be generally controlled or inhibited from leaking between such connections. One of skill in the art will recognize a wide variety of types of sealing means that may be employed to provide a desired seal between such connection. For example, without limitation, sealing means may comprise a diaphragm. However, other sealing means may be employed, such as, for example, an O-ring or the like.

As illustrated in the Figures, valve portion 14 may be configured to be adjacent to actuation portion 12. In an embodiment, valve portion 14 includes a valve body 30 that includes a channel 32 that can longitudinally extend through a first end 33 and a second end 34 of valve body 30. First end 33 of valve portion 14 may be connected to a bottom portion of case 16 of actuation portion 12. In an embodiment, intermediate seating portion 27 further includes at least a segment 35 in communication with channel 32 of valve portion 14 such that they are operatively connected or juxtaposed to at least a portion of channel 23 of actuation portion 12. It will be appreciated, that segment 35 of intermediate seating portion 27, channel 32 of valve portion 14 and channel 23 of actuation portion 12 generally form a continuous channel or axial hole through valve 10.

With continued reference to Figure 1 and Figure 2, valve 10 is shown illustrated in the form of a bleed valve, wherein a blocking element 37 or the like is disposed within a seat 43 between segment 35 of intermediate seating portion 27 and channel 23. It will be appreciated that the dimensions of seat 43 and the dimensions of blocking element 37 can be application-specific, such that various combinations thereof will modify the hydraulic pressure therein and the regulation thereof. Thus, the present invention should not be limited to the illustrated configurations. For example and without limitation, a stop 49 may further be disposed within or about seat 43 to regulate, control, or restrict movement of blocking element 37 or a longitudinal stroke thereof. Among other factors, rod 24, blocking element 37, seat 43, and stop 49 may variably restrict or regulate the amount of fluid passing through segment 35 to thereby allow or generally prevent fluid from exiting though an exhaust passage or aperture 41 a in communication therewith. For example, Figure 1 illustrates valve 10 in an energized or closed position with the blocking element 37 substantially in contact with seat 43. This arrangement generally prohibits fluid from transferring between segment 35 and exhaust aperture 41a such that the hydraulic pressure within segment 35 and into valve portion 14 increases. In an embodiment, blocking element 37 may comprise a ball. However, one of ordinary skill in the art will recognize other structures may be substituted therefore or used in combination therewith.

It will be appreciated that other valve arrangements may be used in accordance with the present invention. For example, rod 24 may be directly connected to the valve portion 14 in concert with blocking element 37, or an integral rod assembly may wholly replace blocking element 37. Among other possible arrangements, Figure 3 illustrates an embodiment of the invention disposed in a directly actuated valve. Thus, the present invention should not be limited by the type of valve and the principles hereof may be applied in a variety of valves. For example, actuation portion 12 may be an inverse-type solenoid such that upon exciting or energizing actuator 17, rod 24 and armature 22 move in a direction generally opposite from the exemplary embodiment herein described. Again, the invention should not be limited to the specific configurations as illustrated and described.

In an embodiment, valve portion 14 includes a spool 36 slidably disposed in channel 32 of valve body 30. The position of spool 36 may be dependant, among other things, upon the position of armature 22 and rod 24; the position of blocking element 37; the amount of fluid resident (and associated pressure) in valve body 30; and the like. These and other features are described further herein. It will be appreciated, that channel 32 and spool 36 may comprise mating surfaces that are honed to a generally fine surface such that the interaction therebetween may generally form a seal to inhibit fluid from passing therebetween and allow spool 36 to slidably reside therealong.

Valve body 30 includes at least three apertures positioned at various points along valve body 30. The illustrated embodiment includes a first passage or aperture 41a, a second passage or aperture 41 b, and a third passage or aperture 41 c. For example, first aperture 41a may provide an exhaust passage, second aperture 41 b may provide an outlet passage, and third aperture 41 c may provide an inlet passage. It will be appreciated that various placements, numbers of apertures, or passages configurations associated with the apertures are contemplated by the invention, and the invention is not limited to the specific design illustrated and described. For example, one of ordinary skill in the art may employ a number of other operational arrangements based on various design specifications and/or requirements.

With reference to the Figures, spool 36 may include a first portion 48, a second portion 50, and an intermediate portion 51 located between first portion 48 and second portion 50. In an embodiment, first end 33 of valve body 30 and first portion 48 of spool 36 generally form a first damper chamber or first chamber 52 having a first chamber pressure. With reference to Figures 1 and 2, blocking element 37 can form a top portion of first chamber 52 and, in part, control the first chamber pressure therewithin.

With continued reference to Figure 1 and Figure 2, first chamber 52 has a first chamber diameter generally defined by an inner diameter of first portion 48 of spool 36 and a first chamber volume generally relating thereto. Referring to Figure 3, first chamber 52 has a first chamber diameter generally defined by an outer diameter of spool 36 or inner diameter of valve body 30 and a first chamber volume generally relating thereto. It will be appreciated that first chamber 52, the first chamber diameter and the first chamber volume may be configured in any manner, for example, first chamber diameter may be any diameter formed by first portion 48 of spool 36 or valve body 30.

In an embodiment, a member 70 and second portion 50 of spool 36 generally define a second damper chamber or second chamber 54 having a second chamber pressure. Second chamber 54 has a second chamber diameter generally defined by an inner diameter of the second portion 50 of spool 36 and a second chamber volume relating thereto. After considering the present disclosure, it will be appreciated that the first chamber diameter, the second chamber diameter, the first chamber volume and the second chamber volume may be utilized to dampen the movement of spool 36 by, for example, generally controlling the pressures within portions of valve body 30. With reference to Figure 1 and Figure 2, it will further be recognized that the ratio of the first diameter and the second chamber diameter may be utilized to configure movement of spool 36 within valve body 30. These and other features will be discussed in further detail hereinbelow.

It will further be appreciated that, in an embodiment, movement of spool 36 may be damped by controlling pressures within first chamber 52 and second chamber 54, and, further the invention hereof may be practiced without damping the first chamber 52 such that second chamber 54 solely provides the damping feature or effect. For example, Figure 3 illustrates an embodiment wherein the movement of spool 36 through valve portion 32 may be damped using second chamber 54 of spool 36. In an embodiment, first chamber 52 simply provides an exhaust passage 41a for allowing fluid that enters first chamber 52 to egress from valve portion 14 and drain therefrom and generally does not contribute to the damping of spool 36. These and other features will be discussed hereinbelow.

Referring to Figures 1-3, intermediate portion 51 and a portion of valve body 30 generally define a control chamber 53 having a control pressure. Spool 36 and control chamber 53 may be adapted to provide a path or passage between outlet aperture 41b and inlet aperture 41c. In an embodiment, intermediate portion 51 of spool 36 is adapted to movably adjust the connection between outlet aperture 41b and inlet aperture 41c as spool 36 moves along channel 32. In this manner, spool 36 may variably restrict fluid from passing to outlet aperture 41b. In contrast, control chamber 53 and inlet aperture 41c have a generally unrestricted hydraulic relationship and the pressures thereof are equivalent. In an embodiment, inlet aperture 41 c provides fluid at a constant rate to control chamber 53. Thus, the pressure within control chamber 53 increases as fluid is restricted from exiting valve 10 via outlet aperture 41b.

Referring to Figures 1 and 2, first chamber diameter is greater than second chamber diameter such that while valve 10 becomes energized, the net hydraulic force on spool 36 generally urges or guides spool 36 towards second end 34 of valve portion 12 and thereby decreases, or stops, communication between outlet aperture 41b and intermediate chamber 53 or inlet aperture 41c. Thus, fluid entering intermediate chamber 53 via inlet aperture 41c is generally prohibited from exiting valve 10 via outlet aperture 41 b. It will be appreciated that various combinations of first chamber diameter and second chamber diameter will resultantly affect movement of spool 36 and the present invention should not be limited to the disclosed embodiment. Moreover, one of ordinary skill will recognize that the communication between aperture 41 c and 41 b may not be totally prohibited as described above such that a minutia of fluid may egress via aperture 41 c. These and other features will become apparent to one of ordinary skill after consulting the present disclosure.

With reference to Figure 3, rod 22 may, alternatively, directly abut a portion of spool 36 and thereby guide spool 36 towards second end 34 of valve portion 12 as actuator 17 is energized. Thus, in this embodiment, the relationship between first chamber diameter to second chamber diameter, generally, does not affect movement of spool 36.

Referring to an embodiment of the bleed valve arrangement, as illustrated in Figures 1 and 2, spool 36 may generally define a first damper orifice or first orifice 56 providing fluid communication between first chamber 52 and control chamber 53, and a second orifice 58 providing fluid communication between second chamber 54 and control chamber 53. In an embodiment, control pressure within control chamber 53 is higher than pressure within first chamber 52 and second chamber 54. Thus, first orifice 56 and second orifice 58 are configured and dimensioned to provide a pressure drop as fluid, originating within control chamber 53, passes via inlet aperture 41c therethrough and into first chamber 52 and/or second chamber 54. For example, the orifice dimensions thereby regulate, control or slow down the amount of fluid exchanged between first chamber 52 and control chamber 53 and/or second chamber 54 and control chamber 53. In an embodiment, first orifice 56 and second orifice 58 have a diameter generally at or between (0.3 - 0.5)mm. It will be appreciated, that the orifices may be manufactured using a simple drill bit or the like, however, one of ordinary skill in the art will recognize equally plausible sizes and methods to manufacture orifice to provide the pressure drop as described herein.

It will further be appreciated that the arrangement of first orifice 56 and second orifice 58 in connection with first chamber 52, second chamber 54 and control chamber 53 provides means to dampen, or cushion the oscillations of the spool 36 as, for example and without limitation, actuator 17 changes from an energized state to a de-energized state and vice versa. Moreover, this arrangement also dampens oscillations independent of the state of actuator 17. For example, without limitation, this arrangement provides means to dampen oscillation of spool 36 that may occur due to variable pressures occurring within control chamber 53. Such oscillation can occur due to a pressure buildup within control chamber 53 while actuator 14 is energized and fluid within intermediate chamber 53 has nowhere to exit. Moreover, oscillations may occur due to an external excitation to the valve.

In accordance with the invention, one of ordinary skill in the art will recognize that first orifice 56 may be omitted such that the dampening may occur generally in connection with second chamber 54, second orifice 58 and control chamber 53. For example, Figure 3 illustrates a damper arrangement, wherein spool 36 does not include first orifice 56 fluidly communicating first chamber 52 and control chamber 53. Accordingly, the damping feature related to second chamber 54 will first be discussed below, and the combination of first chamber 52 with second chamber 54 will be discussed thereafter.

With continued reference to all the Figures, member 70 interacts with second portion 50 of spool 36 to form second chamber 54 at one end thereof. Member 70 has an outer diameter slightly smaller than the inner diameter of second portion 50 of spool 36 such that the interaction therebetween generally seals second chamber 54 and generally prevents fluid from entering second end 34 of valve body 30.

In an embodiment, member 70 is generally configured to be stationary along second end 34 of valve body 30 such that the volume of second chamber 54 expands as spool 36 moves toward first end 33 and contracts as spool 36 moves toward second end 34. Additionally, as the valve is de-energized, the fluid within second chamber 54 exerts a force on spool 36 and an opposite force on member 70 such that the net force on spool 36 within second chamber 54 urges spool 36 to move towards first end 33 of body 30.

With reference to all the Figures, as spool 36 moves toward first end 33 of valve body 30, the volume of second chamber 54 increases and the pressure therein decreases. As a result, fluid is controllably transferred to second chamber 54 from control chamber 53 via second orifice 58 and the movement of spool is dampened due to second orifice 58 regulating, or slowing down the flow of fluid into second chamber 58. Similarly, as spool 36 moves toward second end 34 of valve body 30, the volume of second chamber 54 decreases, and the pressure therein increases. Fluid, therefore, is controllably transferred into control chamber 54 via second orifice 58. Similarly, as the movement of fluid is restrictably controlled by second orifice 58, the movement of spool 36 is dampened as well.

In an embodiment, upon an external excitation to valve 10 such as a jolt thereto or the like, rod 24 and armature 22 may momentarily move such that blocking element 37 moves from seat 43 (as illustrated in Figure 1) or the spool generally moves toward actuation portion 14 (as illustrated in Figure 3). The motion of spool 36 towards actuation portion 12 increases the volume within second chamber 54 and thereby decreases the second chamber pressure therein. As a result, fluid restrictably transfers into control chamber 53 via second orifice 58 and is regulated such that the transfer thereof generally dampens or inhibits the movement of spool 36.

As previously mentioned hereinabove, the diameter of second orifice 58 may be application specific. For example, movement of spool 36 will be increasingly dampened as the diameter of damper orifice decreases and vice-versa.

It will be appreciated that member 70 may be physically attached to second end 34, however, member 70 may also be adapted to maintain its stationary position due to hydraulic forces executed thereon from fluid residing in second chamber 54. In an embodiment, member 70 may be generally retained in place by a plate 72 and a retaining ring 74 wherein the retaining ring 74 is disposed in second end 34 of valve body 30 using known methods. Among other methods, second end 34 of valve body 30 may include a slot, or annulus formed therein to seat retaining ring 74. In an embodiment, plate 72 includes apertures or the like for venting second end 34 of valve body 30. It will be appreciated that this arrangement, and the pressure exerted on member 70 within second chamber 54 generally act to direct member 70 towards plate 72. In an embodiment, member 70 is a dowel pin or the like. Among other possibilities, with reference to the illustrations, a top portion of member 70 may generally be flat such that sediment or the like does not collect between second portion 50 of spool 36 and member 70. Sediment or the like entering therebetween may cause spool 36 in connection with member 70 to seize or the like. Moreover, in an embodiment, a bottom portion of member 70 may form a meniscus such that member 70 generally rests or pivots upon the lower point thereof.

It will be appreciated that a spool-biasing device 80 may further be disposed between plate 72 and spool 36 to act in concert with spool 36 and member 70. In an embodiment, spool-biasing device 80 generally urges spool 36 towards actuation portion 12 such that when actuator is in a de-energized state spool 36 is generally biased toward first end 33 of valve body 30. In an embodiment, an adjusting means (not shown) such as a screw or the like, may be connected to spool biasing device 80 or plate 72 to adjustably define a desired amount of force asserted by spool-biasing device 80 between spool 36 and plate 72, or define a desired compression of spool-biasing device 80. The benefits and uses of spool-biasing device 80 are known. Among other examples, spool-biasing device 80 may comprise a coil spring; however, one of ordinary skill will recognize that other spool-biasing devices may also be used.

Referring now to Figure 1 and Figure 2, it will be appreciated that first chamber 52 may provide an equivalent damping function in concert with first orifice 56 and blocking element 37. That is, first chamber 52 in concert with first orifice 56 generally counteracts or slows down movement of spool 36 through channel 32. For example, as valve 10 becomes de-energized, spool 36 generally moves toward actuation portion 12 (this may also occur due to an external excitation or the like to valve 10) first chamber volume decreases and the pressure therewithin may, momentarily, increase. As a result, first chamber volume decreases and the pressure therewithin may, momentarily, increase. As a result, first chamber 52 may, momentarily, restrictably communicate fluid to control chamber 53 via first orifice 56. As discussed hereinabove, the dimensions of first orifice 56 will slow down the fluid transfer to damp the movement of spool 36. Similarly, as spool 36 moves toward second end 34 of channel 32, the first chamber volume increases and the pressure therein decreases. As such, fluid resident within control chamber 53 controllably enters first chamber 52 via first aperture 56. The dimensions of first orifice slow down this fluid transfer and, therefore, similarly dampen movement of valve 10.

With continued reference to Figure 1 and Figure 2, upon an external excitation to valve 10 such as a jolt thereto or the like, rod 24 and armature 22 may momentarily move such that blocking element 37 moves from seat 43. The positioning of blocking element 37 away from seat 43 will quickly decrease the pressure within first chamber 52 as fluid may exit via exhaust aperture 41 a. As a result, the pressure within second chamber 54 is greater than the pressure within first chamber 52 and the net hydraulic force acting upon spool 36 will urge spool 36 toward actuation portion 12. Thus, the volume of first chamber 52 decreases such that the pressure increases. Generally concurrently, the volume of second chamber 54 increases such that the pressure therein decreases. Thus, fluid restrictably flows into second chamber 54 from control chamber 53 via second orifice 58. After considering the present disclosure, one of ordinary skill in the art will recognize that the decrease in pressure in second chamber 54 and the general concurrent increase in pressure in first chamber 52 create a net hydraulic force upon spool 36 that acts to resist the motion of the spool toward actuation portion 12, thereby damping spool 36 movement.

It will be appreciated, that, among other possibilities, actuator 17 may be electronically actuated through a terminal (not shown). For example, valve 10 is responsive upon the receipt of a first signal sent via an external controller or the like when an increased fluid flow from valve 10 is desired. Conversely, an electrical signal indicating a decrease cause the solenoid spool valve 10 to decrease flow.

The present invention has been particularly shown and described with reference to the foregoing embodiments, which are merely illustrative of the best modes for carrying out the invention. It should be understood by those skilled in the art that various alternatives to the embodiments of the invention described herein may be employed in practicing the invention without departing from the spirit and scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

## Claims

1. A spool for a valve assembly including a valve body, said spool comprising:
an intermediate portion adapted to form a control chamber with the valve body; and
a first end portion adapted to form a first damper chamber with the valve body;
wherein said control chamber is in hydraulic communication with said first damper chamber such that the communication between said first damper chamber and said control chamber dampens movement of said spool within the valve body.

2. The spool according to claim 1, wherein said spool further comprises a first damper orifice adapted to restrictably permit fluid flow between said first damper chamber and said control chamber.

3. The spool according to claim 2, wherein said first damper orifice, said first damper chamber, and said control chamber are in selective communication to dampen movement of said spool in the valve.

4. The spool according to claim 2, wherein a portion of said control chamber is defined by an inner portion of the valve body.

5. The spool according to claim 2, further comprising a member fixedly disposed in an end of the valve such that a portion of said first damper chamber is defined by a portion of said member, and wherein movement of spool away from said member increases the volume of said first damper chamber.

6. The spool according to claim 5, wherein said body generally forms a slidable seal with said first end portion of said spool such that a medium in said first damper chamber is generally prevented from entering a bottom portion of the valve body.

7. The spool according to claim 5, wherein the member comprises a piston or a dowel pin.

8. The spool according to claim 1, wherein said control chamber is in restricted hydraulic communication with said first damper chamber.

9. The spool according to claim 1, wherein said spool further comprises a second end portion adapted to form a second damper chamber with the valve, and a second damper orifice adapted to restrictably permit fluid flow between said second damper chamber and said control chamber.

10. The spool according to claim 9, wherein said first damper orifice and said second damper orifice include a diameter generally between about 0.3 mm and about 1.0 mm.

11. A valve comprising:
a valve body having a first end, a second end, and a central section therebetween; and
a spool slidably disposed in said central section of said valve body, said spool including a first portion, a second portion and an intermediate portion therebetween, said first portion adapted to provide a first chamber in the valve body, said second portion adapted to provide a second chamber in the valve body, and said intermediate portion adapted to provide a control chamber in the valve body;
wherein said spool provides fluidic communication between said central chamber and said second chamber.

12. The valve according to claim 11, wherein said spool further defines a first passage adapted to restrictably permit fluid flow between said second chamber and said control chamber.

13. The valve according to claim 12, wherein said first passage, said second chamber, and said control chamber are further adapted to dampen movement of said spool in said valve

14. The valve according to claim 12, wherein a portion of said control chamber is further defined by a central section of the valve body.

15. The valve according to claim 13, further comprising a member disposed in said second chamber such that a portion of said second chamber is further defined by a portion of said member.

16. The valve according to claim 15, wherein said member is fixedly disposed within said second end of said valve body such that movement of said spool away from said second end of said valve body and said member increases the volume of said second chamber.

17. The valve according to claim 11, wherein said spool further defines a second passage adapted to permit fluid flow control between said first chamber and said control chamber, and wherein said first passage and said second passage are adapted to dampen movement of said spool in combination with said first chamber, said second chamber and said control chamber.

18. The valve according to claim 17, wherein said member generally forms a slidable seal with said spool such that a medium in said second chamber is generally prevented from entering said second end of said valve body.

19. A valve portion for a solenoid valve having an actuation portion and a valve portion, the actuation portion defining a first channel having an armature and a rod slidably disposed therein, said valve portion comprising:
a valve body defining a second channel in hydraulic communication with the first channel of the actuation portion, said valve body further defining an exhaust aperture, an inlet aperture and an outlet aperture; and
a spool slidably disposed in said second channel, said spool adapted to operatively connect to the actuation portion;
wherein actuation of the actuation portion is adapted to urge said spool to generally prohibit hydraulic communication between said inlet aperture and said outlet aperture, and
wherein said spool includes at least one means to damp movement of said spool.

20. The valve portion according to claim 19, wherein said damping means of said spool in conjunction with said valve portion define a control chamber, a first damping chamber, and a first orifice therebetween, and wherein said first orifice restrictably permits fluid flow between said first damping chamber and said control chamber.

21. The valve according to claim 19, further comprising a member fixably disposed in said first damping chamber such that a portion of said first damping chamber is further defined by a portion of said member such that movement of said spool away from said member increases the volume of said damper chamber.

22. The valve portion according to claim 20, wherein said damping means of said spool in conjunction with said valve portion further define a second damping chamber, and a second orifice between said second damping chamber and said control chamber, and wherein said second orifice restrictably permits fluid flow between said second damping chamber and said control chamber.
